# EUROPÄISCHE PATENTSCHRIFT

(11) **EP 1 691 107 B1**
(45) Veröffentlichungstag und Bekanntmachung des Hinweises auf die Patenterteilung: **14.10.2015**
(21) Anmeldenummer: 06000778.8
(22) Anmeldetag: 14.01.2006
(51) Int. Cl.: F16F 15/134, F16F 15/137, F16F 15/131, F16F 15/133

(54) **Torsionsschwingungsdämpfer**
TORSIONAL VIBRATION DAMPER
Amortisseur de vibrations de torsion

(30) Priorität: 11.02.2005 DE 102005006198
(43) Veröffentlichungstag der Anmeldung: 16.08.2006
(73) Patentinhaber: Schaeffler Technologies AG & Co. KG, 91074 Herzogenaurach (DE)
(72) Erfinder: Reder, Reinhold, 76185 Karlsruhe (DE)

(56) Entgegenhaltungen:
- DE-A1- 3 733 544
- DE-U1- 8 513 915
- DE-U1- 8 713 332
- DE-U1- 8 915 354
- US-A- 4 813 295

## Beschreibung

Die Erfindung betrifft einen Torsionsschwingungsdämpfer, insbesondere ein geteiltes Schwungrad, mit einer primären Schwungmasse, die drehfest mit der Antriebswelle einer Brennkraftmaschine verbindbar ist, und mit einer sekundären Schwungmasse, die gegen den Widerstand mindestens einer Energiespeichereinrichtung relativ zu der primären Schwungmasse verdrehbar ist.

Eine derartige Vorrichtung ist durch die DE 3733544 bekannt.

Derartige Torsionsschwingungsdämpfer sind zum Beispiel zwischen den Antriebsmotor und das Getriebe eines Kraftfahrzeugs geschaltet. Im Betrieb des Kraftfahrzeugs können Ungleichförmigkeiten auftreten, welche die primäre Schwungmasse oder die sekundäre Schwungmasse zu Schwingungen anregen.

Aufgabe der Erfindung ist es, einen Torsionsschwingungsdämpfer, insbesondere ein geteiltes Schwungrad, mit einer primären Schwungmasse, die drehfest mit der Antriebswelle einer Brennkraftmaschine verbindbar ist, und mit einer sekundären Schwungmasse, die gegen den Widerstand mindestens einer Energiespeichereinrichtung relativ zu der primären Schwungmasse verdrehbar ist, zu schaffen, bei dem die Übertragung von Schwingungen von der primären Schwungmasse auf die sekundäre Schwungmasse, insbesondere beim Starten der Brennkraftmaschine, verhindert wird.

Die Aufgabe ist bei einem Torsionsschwingungsdämpfer, insbesondere einem geteilten Schwungrad, mit einer primären Schwungmasse, die drehfest mit der Antriebswelle einer Brennkraftmaschine verbindbar ist, und mit einer sekundären Schwungmasse, die gegen den Widerstand mindestens einer Energiespeichereinrichtung relativ zu der primären Schwungmasse verdrehbar ist, dadurch gelöst, dass die primäre Schwungmasse über eine starre Kopplungseinrichtung, die mit einer Zugdämpfungseinrichtung zusammenwirkt, mit der sekundären Schwungmasse koppelbar ist. Bei dem erfindungsgemäßen Torsionsschwingungsdämpfer handelt es sich vorzugsweise um ein Zweimassenschwungrad. Die Erfindung ermöglicht ein Umschalten der Verdrehkennlinie des Zweimassenschwungrads in Abhängigkeit von der Drehzahl. Durch das Zweimassenschwungrad wird die Resonanzfrequenz des Antriebsstrangs zur Schwingungsisolation unterhalb die Leerlaufdrehzahl verschoben. Dabei wirkt sich nachteilig aus, dass der Antriebsstrang bei jedem Start und Stopp die Resonanzfrequenz durchläuft. Durch die starre Kopplung der primären Schwungmasse mit der sekundären Schwungmasse bei Start und Stopp können die resonanzbedingten Probleme reduziert werden. Im Rahmen der vorliegenden Erfindung hat sich herausgestellt, dass beim "Einfangen" der beiden Schwungmassen sehr große Drehmomente auftreten, die im Dauerbetrieb zu einer Beschädigung der starren Kopplungseinrichtung führen können. Durch die erfindungsgemäße Kombination der starren Kopplungseinrichtung mit der Zugdämpfungseinrichtung können die beim Einfangen der beiden Schwungmassen auf die Kopplungseinrichtung wirkenden Kräfte reduziert werden. Im Rahmen der vorliegenden Erfindung wird unter einer starren Kopplungseinrichtung eine Kopplungseinrichtung verstanden, die eine starre Kopplung zwischen einem ersten Teil, zum Beispiel der primären Schwungmasse, und einem zweiten Teil, zum Beispiel der Mitnehmereinrichtung, ermöglicht.

Ein bevorzugtes Ausführungsbeispiel des Torsionsschwingungsdämpfers ist dadurch gekennzeichnet, dass die Zugdämpfungseinrichtung eine Mitnehmereinrichtung umfasst, die gegen den Widerstand eines Zugdämpfungselements relativ zu der sekundären Schwungmasse bewegbar ist. Die Zugdämpfungseinrichtung ist mit Hilfe der Mitnehmereinrichtung zwischen die Kopplungseinrichtung und die sekundäre Schwungmasse geschaltet.

Ein weiteres bevorzugtes Ausführungsbeispiel des Torsionsschwingungsdämpfers ist dadurch gekennzeichnet, dass die Mitnehmereinrichtung eine Mitnehmernase aufweist, an der in einem gekoppelten Zustand eine Klinke der Kopplungseinrichtung so in Eingriff kommt, dass die primäre Schwungmasse starr mit der Mitnehmereinrichtung verbunden wird. Vorzugsweise erstreckt sich die Mitnehmernase in, bezogen auf die Drehachse des Torsionsschwingungsdämpfers, in radialer Richtung nach außen.

Ein weiteres bevorzugtes Ausführungsbeispiel des Torsionsschwingungsdämpfers ist dadurch gekennzeichnet, dass die Klinke im gekoppelten Zustand zwischen der Mitnehmereinrichtung und der primären Schwungmasse eingeklemmt ist. Dadurch wird eine stabile drehfeste Verbindung zwischen der primären Schwungmasse und der Mitnehmereinrichtung geschaffen.

Ein weiteres bevorzugtes Ausführungsbeispiel des Torsionsschwingungsdämpfer ist dadurch gekennzeichnet, dass die Klinke zwei zueinander parallele Klemmflächen aufweist, die im gekoppelten Zustand jeweils an entsprechenden Gegenflächen anliegen, die an der Mitnehmereinrichtung und der primären Schwungmasse vorgesehen sind. Dadurch wird auch bei der Übertragung von großen Momenten zwischen den beiden Schwungmassen eine hohe Lebensdauer des Torsionsschwingungsdämpfers gewährleistet.

Ein weiteres bevorzugtes Ausführungsbeispiel des Torsionsschwingungsdämpfers ist dadurch gekennzeichnet, dass die Klemmflächen und die entsprechenden Gegenflächen in einem Winkel in der Größenordnung von 30 bis 80 Grad, beispielsweise von etwa 45 Grad zu einer Radialen geneigt sind. Die Radiale geht von der Drehachse des Torsionsschwingungsdämpfers aus. Der angegebene Winkel hat sich im Rahmen der vorliegenden Erfindung als besonders vorteilhaft erwiesen.

Ein weiteres bevorzugtes Ausführungsbeispiel des Torsionsschwingungsdämpfers ist dadurch gekennzeichnet, dass ein Kopplungselement so an der primären Schwungmasse angebracht ist, dass die Klinke in den gekoppelten Zustand vorgespannt ist. Das Kopplungselement kann zum Beispiel mit Hilfe einer Schweißverbindung an der primären Schwungmasse befestigt sein. Das Kopplungselement kann aber auch einstückig mit der primären Schwungmasse ausgebildet sein. Besonders vorteilhaft ist es, wenn auch die Klinke einstückig mit dem Kopplungselement ausgebildet ist.

Ein weiteres bevorzugtes Ausführungsbeispiel des Torsionsschwingungsdämpfers ist dadurch gekennzeichnet, dass die Klinke unter Fliehkrafteinwirkung aus dem gekoppelten Zustand in einen entkoppelten Zustand bewegbar ist, in dem die sekundäre Schwungmasse gegen den Widerstand der Energiespeichereinrichtung relativ zu der primären Schwungmasse verdrehbar ist. Im entkoppelten Zustand entfaltet die Zugdämpfungseinrichtung keine Wirkung.

Ein weiteres bevorzugtes Ausführungsbeispiel des Torsionsschwingungsdämpfers ist dadurch gekennzeichnet, dass ein Reibelement so an dem Kopplungselement angreift, dass die Klinke so lange im gekoppelten Zustand gehalten wird, bis ein vorgegebener Drehzahlbereich erreicht wird. Das Reibelement dient dazu, das Entkoppeln der Klinke zu beschleunigen. Das Reibelement unterstützt die Vorspannkraft eines Federelements, durch das die Klinke in den gekoppelten Zustand vorgespannt ist.

Ein weiteres bevorzugtes Ausführungsbeispiel des Torsionsschwingungsdämpfers ist dadurch gekennzeichnet, dass die Mitnehmereinrichtung mindestens ein Fenster umfasst, das deckungsgleich zu einem Fenster in der sekundären Schwungmasse ausgebildet ist, wobei in die Fenster ein Zugenergiespeicherelement eingespannt ist. Bei dem Zugenergiespeicherelement handelt es sich vorzugsweise um eine Schraubendruckfeder. Es kann jedoch auch ein Ringfederpaket oder eine Gummifeder Verwendung finden.

Ein weiteres bevorzugtes Ausführungsbeispiel des Torsionsschwingungsdämpfers ist dadurch gekennzeichnet, dass an der Mitnehmereinrichtung zwei Führungsbolzen befestigt sind, die jeweils in einem Langloch geführt sind, das in der sekundären Schwungmasse vorgesehen ist. Die Langlöcher erstrecken sich jeweils senkrecht zu einer Radialen. Durch die in den Langlöchern geführten Führungsbolzen wird eine Bewegung der Mitnehmereinrichtung gegen den Widerstand des Zugenergiespeicherelements ermöglicht.

Ein weiteres bevorzugtes Ausführungsbeispiel des Torsionsschwingungsdämpfers ist dadurch gekennzeichnet, dass an der sekundären Schwungmasse mindestens ein Flanschelement befestigt ist, das ein erstes Schubenergiespeicherelement aufweist, das an einer Schubdämpfungseinrichtung angreift, die der Energiespeichereinrichtung vorgeschaltet ist. Das Schubenergiespeicherelement und die Schubdämpfungseinrichtung entfalten ihre Wirkung im Schubbetrieb eines mit dem erfindungsgemäßen Torsionsschwingungsdämpfer ausgestatteten Kraftfahrzeugs. Im Schubbetrieb wird ein Drehmoment von der sekundären Schwungmasse auf die primäre Schwungmasse übertragen. Im Gegensatz dazu wird im Zugbetrieb ein Drehmoment von der primären Schwungmasse auf die sekundäre Schwungmasse übertragen. Die im Hinblick auf die vorangegangenen Ausführungsbeispiele genannte Zugdämpfungseinrichtung entfaltet ihre Wirkung nur im Zugbetrieb.

Ein weiteres bevorzugtes Ausführungsbeispiel des Torsionsschwingungsdämpfers ist dadurch gekennzeichnet, dass die Schubdämpfungseinrichtung ein zweites Schubenergiespeicherelement umfasst, das durch das Flanschelement beaufschlagt wird, sobald der Widerstand des ersten Schubenergiespeicherelements zumindest teilweise überwunden ist. Das erste Schubenergiespeicherelement ist vorzugsweise so ausgelegt, dass es die im Schubbetrieb typischen Schubmomente bis circa 60 Nm ausreichend gut aufnehmen und die daraus resultierenden Schwingungen isolieren kann. Momente, zum Beispiel Impacts, die über diese Größenordnung hinausgehen, werden von dem zweiten Schubenergiespeicherelement aufgenommen. Das zweite Schubenergiespeicherelement ist vorzugsweise so ausgelegt, dass es hohe Drehmomente über einen kurzen Federweg aufnehmen kann.

Bei einer Drehmomentübertragungseinrichtung im Antriebsstrang eines Kraftfahrzeugs zur Drehmomentübertragung zwischen einer Antriebseinheit, insbesondere einer Brennkraftmaschine, mit einer Antriebswelle, insbesondere einer Kurbelwelle, mit einem Getriebe mit mindestens einer Getriebeeingangswelle und mit einer Kupplungseinrichtung ist die vorab angegebene Aufgabe dadurch gelöst, dass mindestens ein vorab beschriebener Torsionsschwingungsdämpfer zwischen die Antriebswelle der Antriebseinheit und die Getriebeeingangswelle geschaltet ist. Die erfindungsgemäße Drehmomentübertragungseinrichtung liefert den Vorteil, dass die sowohl beim Starten als auch beim Abstellen der Brennkraftmaschine die im Moment des Koppelns der primären Schwungmasse mit der sekundären Schwungmasse auf die Kopplungseinrichtung wirkenden Drehmomente reduziert werden können.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: einen Halbschnitt durch einen erfindungsgemäßen Torsionsschwingungsdämpfer;
- Figur 2: einen ähnlichen Halbschnitt wie in Figur 1 an einer anderen Stelle;
- Figur 3: die Ansicht eines Schnitts entlang der Linie III-III in Figur 2;
- Figur 4: die Ansicht eines Schnitts entlang der Linie IV-IV in Figur 3;
- Figur 5: eine vergrößerte Ansicht einer Einzelheit V aus Figur 3;
- Figur 6: die gleiche Ansicht wie in Figur 3 im entkoppelten Zustand;
- Figur 7: eine vergrößerte Ansicht einer Einzelheit VII aus Figur 6;
- Figur 8: die Ansicht eines Schnitts entlang der Linie VIII-VIII in Figur 1;
- Figur 9: die gleiche Ansicht wie in Figur 8 im Schubbetrieb;
- Figur 10: das Flanschelement aus den Figuren 8 und 9 in Alleinstellung;
- Figur 11: ein ähnliches Ausführungsbeispiel wie in Figur 8 gemäß einem weiteren Ausführungsbeispiel;
- Figur 12: ein ähnliches Ausführungsbeispiel wie in den Figuren 8 und 11 gemäß einem weiteren Ausführungsbeispiel;
- Figur 13: eine weitere Schnittansicht des erfindungsgemäßen Torsionsschwingungsdämpfers und
- Figur 14: die Auftragung des Drehmoments über dem Drehwinkel mit verschiedenen Kennlinien.

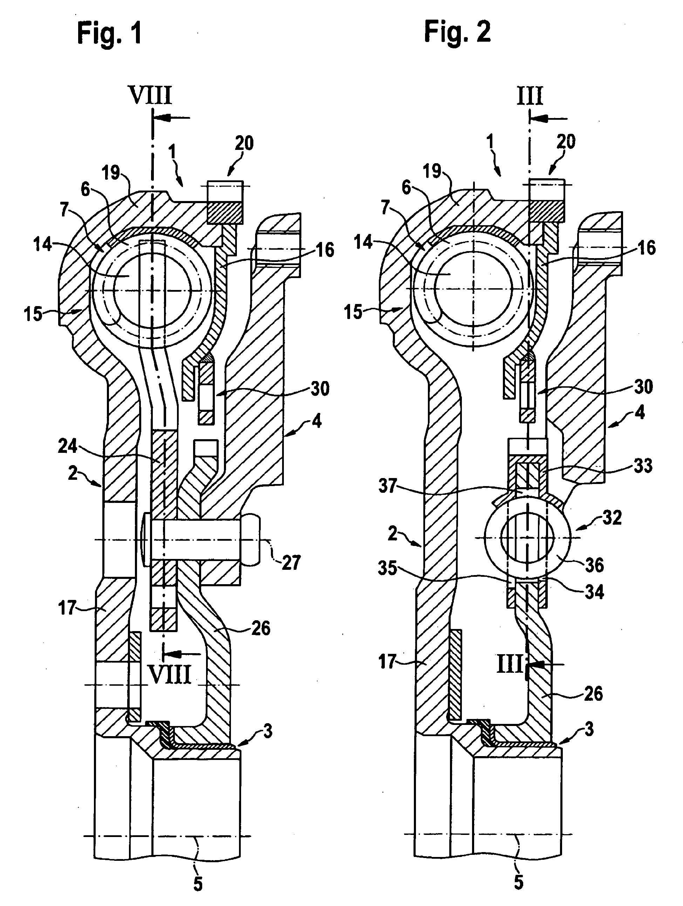

In den Figuren 1 und 2 ist ein Torsionsschwingungsdämpfer 1 in zwei verschiedenen Längsschnitten dargestellt. Bei dem Torsionsschwingungsdämpfer 1, der auch als Drehschwingungsdämpfer bezeichnet wird, handelt es sich um ein Zweimassenschwungrad. Das Zweimassenschwungrad 1 umfasst eine an einer Kurbelwelle einer Brennkraftmaschine eines Kraftfahrzeugs befestigbare Primärschwungmasse 2, die auch als Primärmasse oder als Eingangsteil bezeichnet wird. An der primären Schwungmasse 2 ist mittels eines Lagers 3, zum Beispiel eines Gleitlagers, eine sekundäre Schwungmasse 4, die auch als Sekundärmasse oder Ausgangsteil bezeichnet wird, koaxial und verdrehbar um eine Drehachse 5 gelagert. Die sekundäre Schwungmasse 4 ist drehfest an einem (nicht dargestellten) Eingangsteil einer Kupplungseinrichtung befestigbar.

Die primäre Schwungmasse 2 ist über eine komprimierbare Energiespeicher 6 aufweisende Dämpfungseinrichtung 7, die auch als Energiespeichereinrichtung bezeichnet wird, antriebsmäßig mit der sekundären Schwungmasse 4 verbunden. Die Energiespeicher 6, hier in Form von in Umfangsrichtung länglichen Schraubenfedern mit einem großen Kompressionsweg, sind in einer Kammer 14 aufgenommen, die zumindest teilweise mit einem viskosen Medium gefüllt sein kann. Die Kammer 14 ist durch zwei aus Blech herstellbare Bauteile 15, 16 begrenzt, die zu der primären Schwungmasse 2 gehören. Das Bauteil 15 besitzt einen radial verlaufenden Bereich 17, der auch als Eingangsteil des Torsionsschwingungsdämpfers 1 bezeichnet wird und radial innen mittels Schrauben mit der Kurbelwelle der Brennkraftmaschine verbindbar ist. Radial außen geht das Bauteil 15 in einen axialen Ansatz 19 über, an dem das eine Trennwand bildende Bauteil 16, das auch als Deckel bezeichnet wird, dicht befestigt ist. Die Bauteile 15, 16 tragen radial außen einen Anlasserzahnkranz 20.

Ein ring- beziehungsweise flanschförmiges Bauteil 24 bildet das Ausgangsteil der drehelastischen Dämpfungseinrichtung 7. Das flanschförmige Bauteil 24 weist radial außen Ausleger auf, die sich radial zwischen den Endbereichen zweier benachbarter Energiespeicher erstrecken. Bei einer Relativdrehung zwischen dem Flanschteil 24, das auch als Ausgangsteil oder Flansch bezeichnet wird, und der primären Schwungmasse werden die Energiespeicher 6 zwischen den Auslegern und Abstützbereichen komprimiert, die in bekannter Art und Weise an den Bauteilen 15, 16 vorgesehen sind.

Der radial innere Bereich des Flansches 24 ist mit Hilfe von Nietverbindungen 27 fest mit der sekundären Schwungmasse verbunden. Radial innen ist eine Sekundärschwungscheibe 26, die zu der sekundären Schwungmasse 4 gehört, mit Hilfe der Nietverbindungen 27 fest mit dem Flansch 24 verbunden. Die Sekundärschwungscheibe 26 ist mit Hilfe einer Kopplungseinrichtung 30 mit dem Bauteil 16 der primären Schwungmasse 2 koppelbar. In Figur 2 sieht man, dass eine Zugdämpfungseinrichtung 32 zwischen die Kopplungseinrichtung 30 und die Sekundärschwungscheibe 26 geschaltet ist.

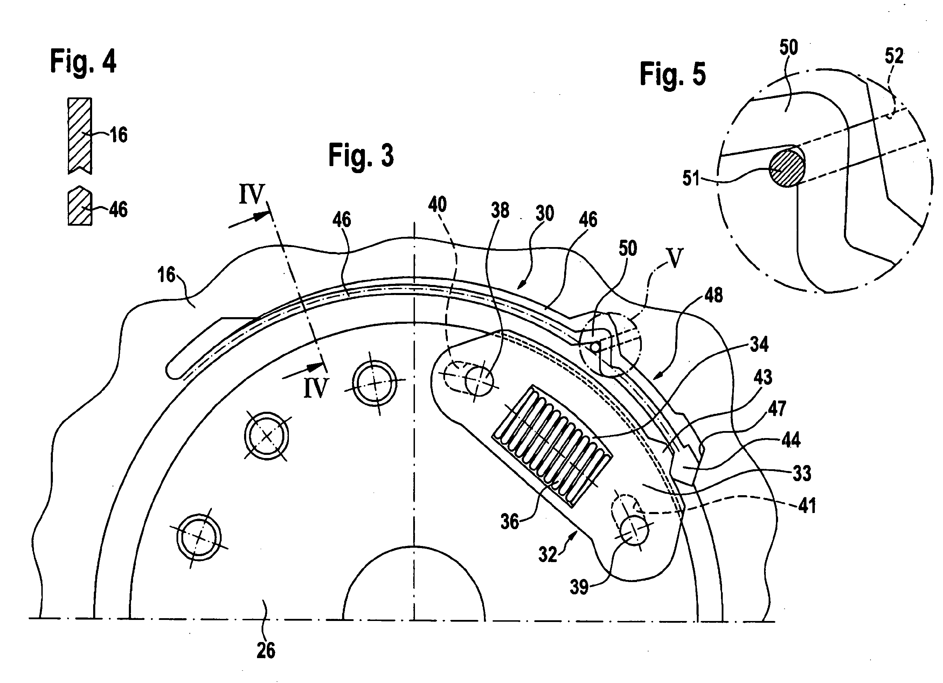

In Figur 3 ist die Ansicht eines Schnitts entlang der Linie III-III in Figur 2 dargestellt. In den Figuren 2 und 3 sieht man, dass die Zugdämpfungseinrichtung 32 eine Mitnehmereinrichtung 33 umfasst. Die Mitnehmereinrichtung 33 weist zwei Fenster 34, 35 auf, die zueinander und zu einem weiteren Fenster 37 deckungsgleich sind, das in der Sekundärschwungscheibe 26 ausgebildet ist. In Längsrichtung der Fenster 34, 35 und 37 ist ein Zugdämpfungselement 36 eingespannt, das von einer Schraubendruckfeder gebildet wird. An der Mitnehmereinrichtung 33 sind zwei Führungsbolzen 38, 39 befestigt, die in Langlöchern 40, 41 geführt sind, die in der Sekundärschwungscheibe 26 vorgesehen sind. Die in den Langlöchern 40, 41 geführten Führungsbolzen 38, 39 ermöglichen eine Bewegung der Mitnehmereinrichtung 33 relativ zu der Sekundärschwungscheibe 26 und umgekehrt. Radial außen ist an der Mitnehmereinrichtung 33 eine Mitnehmernase 43 ausgebildet, die eine Klemmfläche aufweist, die auch als Anlagefläche bezeichnet werden kann und in einem Winkel von 45 Grad zu einer Radialen verläuft. In Figur 3 ist ein Zustand dargestellt, der als gekoppelter Zustand bezeichnet wird und in dem an der Klemmfläche der Mitnehmernase 43 eine Gegenfläche anliegt, die an einer Klinke 44 ausgebildet ist. Die Klinke 44 weist auf ihrer der Mitnehmernase 43 abgewandten Seite eine weitere Gegenfläche auf, die an einer entsprechend ausgebildeten Anlagefläche 47 anliegt, die an dem Bauteil 16 der Primärschwungmasse ausgebildet ist. Die an der Klinke 44 ausgebildeten Gegenflächen und die an dem Bauteil 16 ausgebildete Anlagefläche 47 sind parallel zu der Klemmfläche ausgebildet, die an der Mitnehmernase 43 ausgebildet ist.

In dem in Figur 3 dargestellten Zustand ist die primäre Schwungmasse über das Bauteil 16 und die Klinke 44 starr mit der Mitnehmereinrichtung 33 gekoppelt. Die Mitnehmereinrichtung 33 wiederum ist über das Zugdämpfungselement 36 nicht starr, sondern gegen den Widerstand des Zugdämpfungselements 36 begrenzt bewegbar mit der Sekundärschwungscheibe 26 gekoppelt.

Die Klinke 44 ist an dem freien Ende eines Federelements 46 ausgebildet. Das Federelement 46 wiederum geht von dem Bauteil 16 der primären Schwungmasse aus. Wie in den Figuren 1 und 2 dargestellt ist, kann das Federelement (siehe Bezugszeichen 30) auch an das Bauteil 16 der primären Schwungmasse 2 angeschweißt sein. Das Federelement 46 und die Klinke 44 stellen Teile eines Kopplungselements 48 dar, das zu der Kopplungseinrichtung 30 gehört. In der Hälfte des Federelements 46, an deren Ende die Klinke 44 angeordnet ist, weist das Federelement 46 einen V-förmigen Bereich 50 auf. Die Spitze des V-förmigen Bereichs 50 ist radial nach außen gerichtet.

In Figur 4 ist die Ansicht eines Schnitts entlang der Linie IV-IV in Figur 3 dargestellt. In Figur 4 sieht man, dass das Federelement 46 an einzelnen Stellen so gestaltet ist, dass es eine axiale Führung der Klinke 44 ermöglicht, wenn das Federelement 46 an dem Bauteil 16 der primären Schwungmasse anliegt.

In Figur 5 ist eine vergrößerte Darstellung einer Einzelheit V aus Figur 3 dargestellt. In Figur 5 sieht man, dass der V-förmige Bereich 50 im Wesentlichen die Gestalt eines Knies aufweist. In der Kniekehle des Knies greift ein Reibungselement 51 an. Das Reibungselement 51 ist mit Hilfe eines Halteelements 52 an dem Bauteil 16 der primären Schwungmasse befestigt. Das Halteelement 52 kann einstückig mit dem Reibungselement 51 aus Kunststoff gebildet sein.

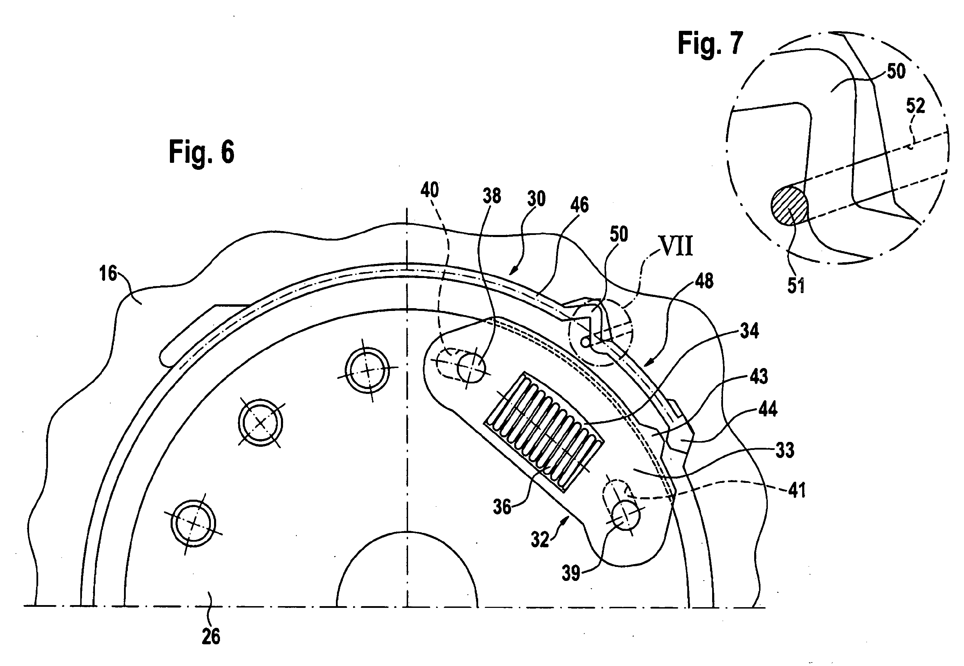

In Figur 6 befindet sich die Klinke 44 in einem so genannten entkoppelten Zustand, in dem sich die Klinke 44 nicht mehr mit der Mitnehmernase 43 der Mitnehmereinrichtung 33 in Eingriff befindet. In Figur 6 liegt die Klinke 44 an dem Bauteil 16 der primären Schwungmasse an. Zu diesem Zweck ist eine entsprechende Aussparung oder Ausnehmung in dem Bauteil 16 vorgesehen. Im entkoppelten Zustand ist die Mitnehmereinrichtung 33 nicht mehr über die Kopplungseinrichtung 30 mit dem Bauteil 16 der primären Schwungmasse gekoppelt.

In Figur 7 ist eine Einzelheit VII aus Figur 6 vergrößert dargestellt. Die Darstellung der Figur 7 zeigt das Reibelement 51 im entkoppelten Zustand der Klinke 44. Der gekoppelte Zustand ist in Figur 5 dargestellt.

Das Federelement 46 ist so gestaltet, dass es ohne Drehzahl die Klinke in die in Figur 3 dargestellte Position drückt, in der ein Drehmoment zwischen der primären Schwungmasse (Bauteil 16) und der Mitnehmereinrichtung 33 übertragen wird. Unter Drehzahl steigt die Fliehkraft auf die Klinke 44 und das Federelement 46. Schließlich wird die Fliehkraft so groß, dass die Klinke 44 mit dem Federelement 46 nach außen gedrückt wird und sich aus dem Eingriff mit der Mitnehmernase 43 der Mitnehmereinrichtung 33 löst. Dabei legen sich das Federelement 46 und die Klinke 44 außen in eine passende Kontur in dem Bauteil 16 des primären Schwungrads beziehungsweise der primären Schwungmasse. Eine weitere Erhöhung der Drehzahl führt zu keiner weiteren Formänderung mehr. Bei der Gestaltung des Federelements 46 ist es vorteilhaft, eine möglichst weiche Kennlinie zu erzeugen, so dass zwischen dem Punkt der vollständigen Kopplung und der vollständigen Entkopplung eine möglichst kleine Differenzdrehzahl liegt.

Das Reibelement 51 dient dazu, die Entkopplungsgeschwindigkeit noch zu erhöhen. Durch das Reibelement 51 wird die Klinke 44 noch länger als durch die Vorspannkraft des Federelements 46 allein im gekoppelten Zustand gehalten. Durch eine günstige Gestaltung der Reibkontaktstelle lässt sich erreichen, dass sich die Reibverhältnisse ändern, sobald eine erste Bewegung stattgefunden hat. Das erzeugt einen Schnappeffekt, der die eigentliche Entkopplungszeit auf wenige Millisekunden reduziert. Nach der Freigabe durch die Klinke 44 wird das Drehmoment zugseitig über das Flanschteil 24 und die konventionelle Bogenfeder 6 geleitet. Im entkoppelten Zustand der Klinke 44 befindet sich das Zweimassenschwungrad im normalen Fahrbetrieb.

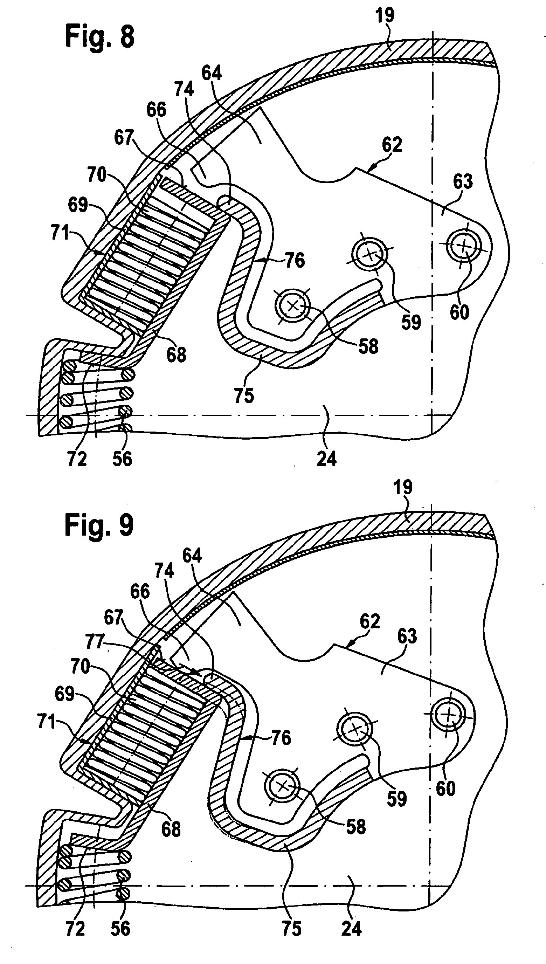

In Figur 8 ist die Ansicht eines Schnitts entlang der Linie VIII-VIII dargestellt. In Figur 8 sieht man, dass zusätzlich zu der in Figur 1 sichtbaren Bogenfeder 6 noch eine weitere Bogenfeder 56 vorgesehen ist. Aus Gründen der Übersichtlichkeit ist in Figur 8 nur ein Viertel des flanschförmigen Bauteils 24 dargestellt. An dem flanschförmigen Bauteil 24 ist mit Hilfe von Nietverbindungen 58, 59, 60 ein Flanschelement 62 befestigt. Das Flanschelement 62 weist radial innen einen Befestigungsabschnitt 63 auf, der mit den Nietverbindungen 58 bis 60 ausgestattet ist. Radial außen weist das Flanschelement 62 einen Kopplungsabschnitt 64 auf. Der Kopplungsabschnitt 64 weist auf seiner der Bogenfeder 56 zugewandten Seite eine Nase 66 auf, die von einer Anlagefläche 67 beabstandet ist, die an einem Stützblech 68 ausgebildet ist. Das Stützblech 68 bildet zusammen mit einem Zwischenblech 69 einen Aufnahmeraum für eine Schraubendruckfeder 70, die ein Schubenergiespeicherelement darstellt. Das Stützblech 68, das Zwischenblech 69 und die Schraubendruckfeder 70 bilden eine Schubdämpfungseinrichtung 71. An dem der Bogenfeder 56 zugewandten Ende des Stützblechs 68 ist eine Anlagefläche 72 ausgebildet, an der ein Ende der Bogenfeder 56 anliegt. Das Stützblech 68 ist, wenn auf die Anlagefläche 67 eine Druckkraft aufgebracht wird, in Richtung der Längsachse der Schraubendruckfeder 70 so bewegbar, dass die Bogenfeder 56 zusammengedrückt wird. Der Energiespeicher 70 kann auch durch ein Ringfederpaket oder einen Gummiblock gebildet sein.

An der Anlagefläche 67 des Stützblechs 68 liegt ein Ende 74 eines Federfingers 75 an. Der Federfinger 75, der von dem Flanschelement 62 ausgeht, bildet ein weiteres Schubenergiespeicherelement 76. Wenn sich der Kopplungsabschnitt 64 des Flanschelements 62 auf die Anlagefläche 67 zu bewegt, dann verformt sich der Federfinger 75 solange, bis die Nase 66 an der Anlagefläche 67 anliegt.

In Figur 9 ist ein Zustand des Flanschelements 62 gezeigt, in dem die Nase 66 des Kopplungsabschnitts 64 an der Anlagefläche 67 anliegt. Wenn sich der Kopplungsabschnitt 64 weiter gegen den Uhrzeigersinn bewegt, dann wird die Schraubendruckfeder 70 komprimiert. Gleichzeitig wird die Bogenfeder 56 über das Stützblech 68 komprimiert. Gemäß der vorliegenden Erfindung ist die Schubseite nicht nur für den Start, sondern auch für den Schub im Fahrbetrieb optimiert. Zu diesem Zweck ist der Federfinger 75 in das Flanschteil 62 integriert. Der Federfinger 75 ist so ausgelegt, dass er die im Schub typischen Schubmomente bis circa 60 Nm ausreichend gut aufnehmen und die Schwingungen isolieren kann. Momente, zum Beispiel Inpacts, die über diese Größenordnung hinausgehen, werden von der Schraubendruckfeder 70 aufgenommen. Die zugehörige Schubdämpfungseinrichtung ist so gestaltet, dass sie hohe Momente über einen kurzen Federweg aufnehmen kann.

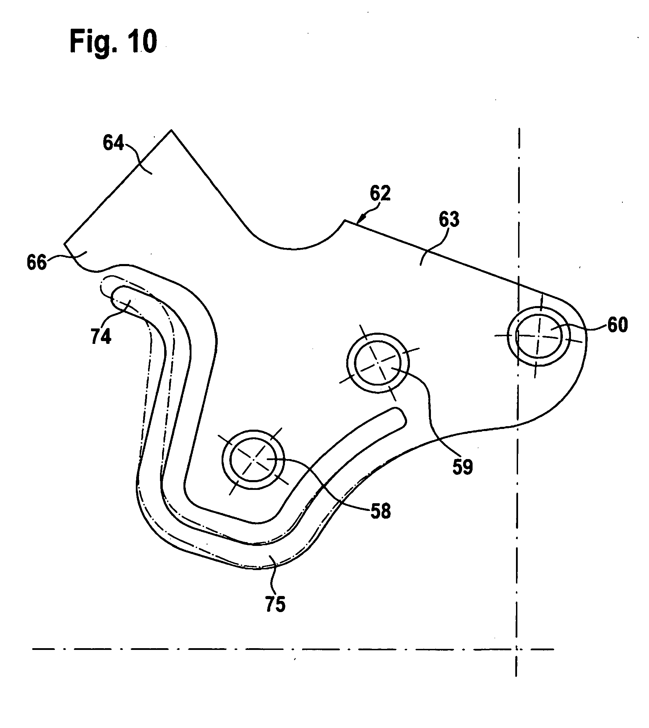

In Figur 10 ist das Flanschteil 62 vergrößert allein dargestellt. In Figur 10 ist durch eine strichpunktierte Linie die Stellung angedeutet, die der Federfinger 75 unter Fliehkrafteinwirkung einnimmt. Die Gestalt des Federfingers 75 ist so gewählt, dass sich die Spitze 74 des Federfingers 75 unter der Einwirkung einer bei höherer Drehzahl auftretenden Fliehkraft gerade radial nach außen bewegt. Damit wird sichergestellt, dass die Federkennlinie, die der Federfinger 75 erzeugt, unabhängig von der Drehzahl ist. Die Form des Federfingers 75 kann auch so gestaltet sein, dass sich das Ende oder die Spitze 74 in eine vorteilhafte Richtung bewegt. Durch die Optimierung von Materialspannungen, übertragbarem Drehmoment und Federweg kann die Gestalt des Federfingers 75 auch mehr oder weniger stark von der dargestellten Gestalt abweichen.

Das Flanschelement 62 kann so gestaltet werden, dass der Federfinger 75 nur bis zu einer bestimmten Last beansprucht wird. Ab einer einstellbaren Last werden Übermomente über die Nase 66 geleitet, so dass der Federfinger 75 nicht auf Block geht und somit nicht mehr die Tendenz hat, axial auszuweichen. Diese Lösung ermöglicht auch größere Freiheitsgrade bei der Auslegung der Federkennlinie in den Bereichen Drehmoment und Verdrehwinkel und damit Steigung. In Figur 9 ist durch einen Pfeil 77 angedeutet, dass auf das Flanschelement 62 bei Übermomenten eine Querkraft wirkt, die aus der Linearbewegung der Schubenergiedämpfungseinrichtung 71 und der Reibkraft zwischen der Nase 66 und der Anlagefläche 67 hervorgeht. Diese Querkraft ist vorteilhaft für die Spannungsverteilung in dem Flanschelement 62.

Zur Bedämpfung von kurzfristigen, größeren Schwingwinkeln im Leerlauf, zum Beispiel durch Fehlzündungen, ist die Schubseite des flanschförmigen Bauteils 24 über das Stützblech 68 mit der Bogenfeder 56 hinter der Schubenergiedämpfungseinrichtung 71 verbunden. Damit lässt sich verhindern, dass die eventuell reibungsfreie Schubisolierung ein Aufschaukeln des Schwingungssystems erzeugt. Das Flanschelement 62 muss dann bei größeren Schwingwinkeln jeweils die Bogenfeder 56 durch den zugehörigen Kanal schieben (jeweils Zug und Schub), was mit Reibung verbunden ist. Bei günstiger Ausgestaltung des Stützblechs 68 kann auf ein ansonsten erforderliches Anschleifen der Bogenfederendwindung verzichtet werden. Wenn das Stützblech 68 nur in der axialen Mitte (axial aus dem Zweimassenschwungrad-Zusammenbau) angreift, dann können resultierende Querkräfte vernachlässigt werden.

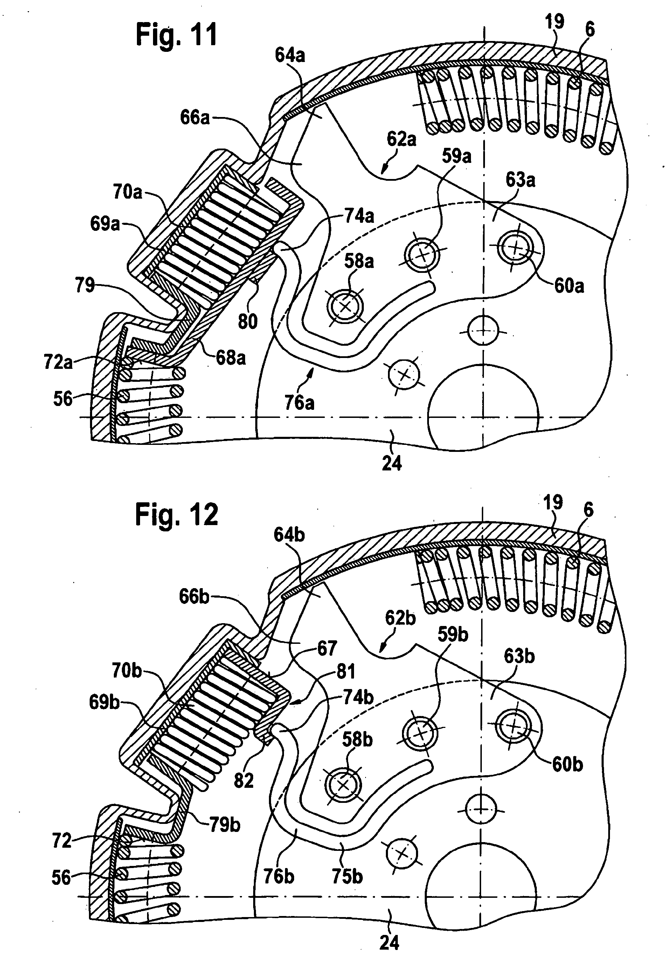

In Figur 11 ist ein ähnliches Ausführungsbeispiel wie in Figur 8 dargestellt. Zur Bezeichnung gleicher oder ähnlicher Teile werden die gleichen Bezugszeichen mit einem nachgestellten a verwendet. Im Folgenden wird nur auf die Unterschiede zwischen den beiden Ausführungsbeispielen eingegangen.

Bei dem in Figur 11 dargestellten Ausführungsbeispiel ist zwischen der Schraubendruckfeder 70a und dem mit der Anlagefläche 72a ausgestatteten Ende des Stützblechs 68a ein weiteres Blechteil 79 angeordnet, das im Wesentlichen die Gestalt eines U's mit zwei Schenkeln aufweist. Der eine Schenkel des U's liegt an dem Ende des Stützblechs 68a an. An dem anderen Schenkel des U's liegt ein Ende der Schraubendruckfeder 70a an. Außerdem ist auf der der Schraubendruckfeder 70a abgewandten Seite des Stützblechs 68a ein Zusatzteil 80 angesetzt, an dem das Ende 74a des Federfingers 75a angreift. Die Schraubendruckfeder 70a kann auch durch ein Ringfederpaket oder einen Gummiblock ersetzt werden.

In Figur 12 ist ein ähnliches Ausführungsbeispiel wie in den Figuren 8 und 11 dargestellt. Gleiche oder ähnliche Teile werden mit gleichen Bezugszeichen bezeichnet, denen ein b nachgestellt wird. Im Folgenden wird nur auf die Unterschiede zwischen den Ausführungsbeispielen eingegangen.

Bei dem in Figur 12 dargestellten Ausführungsbeispiel ist die Anlagefläche 67 an einem Stützblech 81 ausgebildet, das einen abgewinkelten Bereich 82 aufweist, an dem das Ende 74b des Federfingers 75b angreift. Die Schraubendruckfeder 70b ist über ein im Wesentlichen U-förmiges Kopplungsblechteil 79b, das dem in Figur 11 dargestellten Kopplungsteil 79 ähnelt, mit der Bogenfeder 56 gekoppelt.

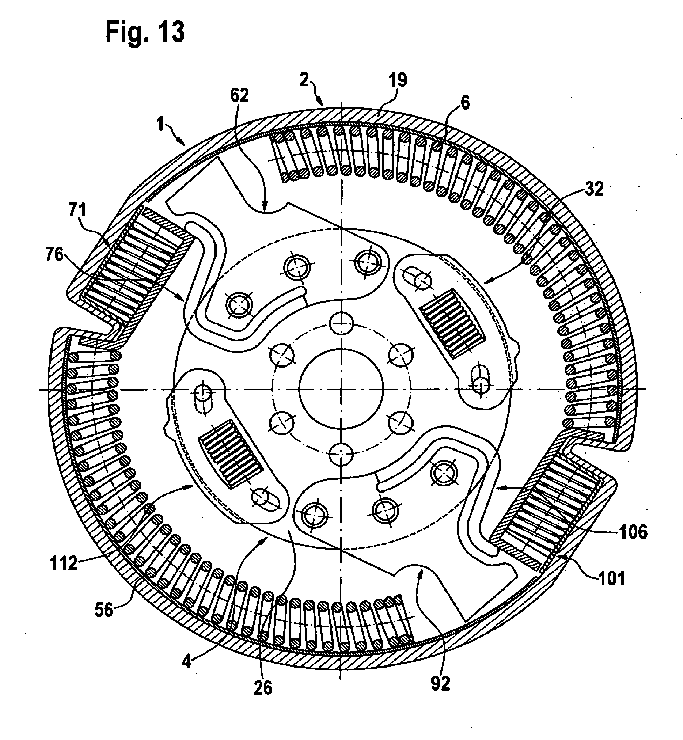

In Figur 13 ist ein Schnitt dargestellt, in dem sowohl die Zug- als auch die Schubdämpfungseinrichtungen sichtbar sind. In Figur 13 sieht man, dass der erfindungsgemäße Torsionsschwingungsdämpfer zwei Bogenfedern 6, 56 umfasst. Zur Definition der Bewegungsrichtungen im Zug- und Schubbetrieb wird angenommen, dass die Primärschwungmasse 2 fest und die Sekundärschwungmasse 4 relativ zu der feststehenden primären Schwungmasse 2 bewegbar ist. Unter dieser Annahme bewegt sich die Sekundärschwungmasse 4 im Schubbetrieb gegen den und im Zugbetrieb im Uhrzeigersinn. In Figur 13 sieht man, dass diametral gegenüberliegend zu dem Flanschelement 62 ein weiteres Flanschelement 92 angeordnet ist, das mit einer Schubdämpfungseinrichtung 101 zusammenwirkt und mit einem Schubenergiespeicherelement 106 ausgestattet ist. Des Weiteren ist diametral gegenüberliegend zu der Zugdämpfungseinrichtung 32 eine weitere Zugdämpfungseinrichtung 112 vorgesehen, die analog zu der Zugdämpfungseinrichtung 32 ausgebildet ist.

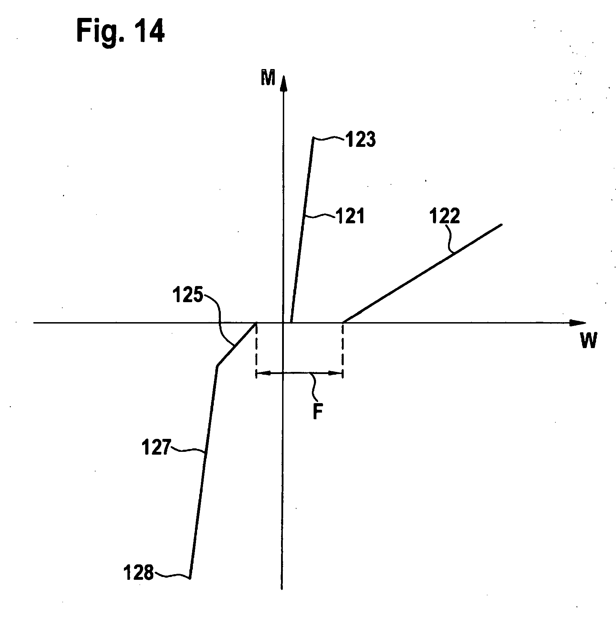

In Figur 14 ist der Verlauf des Drehmoments M über den Drehwinkel W anhand verschiedener Kennlinien dargestellt. Mit 121 ist die Verdrehkennlinie beim Starten und Stoppen der Brennkraftmaschine dargestellt. In diesem Zustand ist im Zugbetrieb das Zugdämpfungselement 36 wirksam. Die Kennlinie 121 weist ein hohes Anschlagmoment 123 auf. Mit 122 ist die Verdrehkennlinie im Fahrbetrieb bezeichnet. Im Fahrbetrieb sind im Zugbetrieb die Bogenfedern 6, 56 wirksam. Die Klinke 44 ist entkoppelt.

Mit 125 ist die Kennlinie bei Drehmomenten bis minus 80 Nm bezeichnet. In diesem Zustand ist im Schubbetrieb der Federfinger 75 wirksam. Der Verdrehwinkelbereich, in dem der Federfinger 75 wirksam ist, beträgt etwa 2 Grad. Der Freiwinkel ist mit F bezeichnet. Mit 127 ist die Kennlinie im Schubbetrieb bei größeren negativen Drehmomenten bezeichnet. In diesem Zustand entfaltet die Schubdämpfungseinrichtung 71 ihre Wirkung. Das zugehörige Anschlagmoment ist mit 128 bezeichnet. Der Verdrehwinkelbereich, in dem die Schubdämpfungseinrichtung 71 wirksam ist, kann in der Größenordnung von 3 bis 7 Grad liegen.

Um im Betrieb möglichst niedrige Drehmomente zu erreichen, sind die Kennlinien vorzugsweise asymmetrisch gestaltet. Außerdem wird auf der Schubseite vorzugsweise ein Dämpfer vorgesehen, der möglichst viel Energie in Wärme umwandelt und nicht wieder in Form von kinetischer Energie freisetzt. Gemäß der vorliegenden Erfindung wird möglichst viel kinetische Energie von der zugseitigen Verdrehung aus dem Schwingungssystem genommen. Die Energie, die dann wiederum zugseitig auf die Klinke 44 treffen kann, wird somit minimiert.

Gemäß einem weiteren Aspekt der vorliegenden Erfindung trifft das Flanschelement 62 zu einer Zeit auf den Schubdämpfer, in der sich die Massenkräfte des Motors noch in der Verzögerungsphase befinden. Das bedeutet, dass das Zweimassenschwungrad für eine gewisse Zeit ein Schubmoment erfährt, welches der Klinke Zeit gibt, vollständig einzurasten, bevor das Zweimassenschwungrad wieder auf Zug belastet wird.

Die Einkoppelzeit der Klinke wird gemäß der vorliegenden Erfindung verschiedenartig günstig beeinflusst. Erstens wirkt das Reibelement mit dem Schnappeffekt in die andere Richtung.

Zweitens wird die "gefahrlose Einkoppelzeit" dadurch verlängert, dass die Einkoppeldrehzahl möglichst niedrig eingestellt wird. Verzögerungs- und Beschleunigungsphasen der Kurbelwelle werden bei sinkender Drehzahl immer länger. Bei fixer Einkoppelgeschwindigkeit wird das günstige Zeitfenster damit relativ länger.

Der Bereich der niedrigsten Drehzahl innerhalb einer Kurbelwellenumdrehung ist genau in dem Bereich, wenn das Zweimassenschwungrad schubseitig verdreht ist und die Klinke in die zugehörige Sperre einrasten könnte. Wenn jedoch innerhalb des jeweiligen Zyklus die Geschwindigkeit zum Einkoppeln nicht niedrig genug ist, dann wird das Primärschwungrad, und damit die Klinke, wieder beschleunigt und es besteht nicht die Gefahr, dass die Klinke zu einem anderen Zeitpunkt einrastet. Sollte die Klinke jedoch trotzdem zu einem anderen Zeitpunkt einrasten, so ist die Konstruktion so ausgeführt, dass die Klinke über den Anschlag geschoben werden kann und bei erneuter zugseitiger Belastung das Drehmoment überträgt.

### Bezugszeichenliste

- 1.: Torsionsschwingungsdämpfer
- 2.: Primärmasse
- 3.: Lager
- 4.: Sekundärmasse
- 5.: Drehachse
- 6.: Energiespeicher
- 7.: Dämpfungseinrichtung
- 14.: Kammer
- 15.: Bauteil
- 16.: Bauteil
- 17.: Bereich
- 19.: Ansatz
- 20.: Anlasserzahnkranz
- 24.: flanschförmiges Bauteil
- 26.: Sekundärschwungscheibe
- 27.: Nietverbindung
- 30.: Kopplungseinrichtung
- 32.: Zugdämpfungseinrichtung
- 33.: Mitnehmereinrichtung
- 34.: Fenster
- 35.: Fenster
- 36.: Zugenergiespeicherelement
- 37.: Fenster
- 38.: Führungsbolzen
- 39.: Führungsbolzen
- 40.: Langloch
- 41.: Langloch
- 43.: Mitnehmernase
- 44.: Klinke
- 46.: Federelement
- 47.: Anlagefläche
- 48.: Kopplungselement
- 50.: V-förmiger Bereich
- 51.: Reibelement
- 52.: Halteelement
- 56.: Bogenfeder
- 58.: Nietverbindung
- 59.: Nietverbindung
- 60.: Nietverbindung
- 62.: Flanschelement
- 63.: Befestigungsabschnitt
- 64.: Kopplungsabschnitt
- 66.: Nase
- 67.: Anlagefläche
- 68.: Stützblech
- 68a.: Stützblech
- 69.: Zwischenblech
- 70.: Schraubendruckfeder
- 70a.: Schraubendruckfeder
- 70b.: Schraubendruckfeder
- 71.: Schubenergiespeicherelement
- 72.: Anlagefläche
- 72a.: Anlagefläche
- 74.: Ende
- 74a.: Ende
- 74b.: Ende
- 75.: Federfinger
- 75a.: Federfinger
- 75b.: Federfinger
- 76.: Schubenergiespeicherelement
- 77.: Pfeil
- 79.: weiteres Teil
- 79b.: Kopplungsblechteil
- 80.: Zusatzteil
- 81.: Stützblech mit abgewinkeltem Arm
- 82.: abgewinkelter Bereich
- 92.: Flanschelement
- 101.: Schubdämpfungseinrichtung
- 106.: Schubenergiespeicherelement
- 112.: Zugdämpfungseinrichtung
- 121.: Verdrehkennlinie
- 122.: Verdrehkennlinie
- 123.: Anschlagmoment
- 125.: Kennlinie
- 127.: Kennlinie
- 128.: Anschlagmoment

- M: = Drehmoment
- W: = Drehwinkel
- F: = Freiwinkel

## Patentansprüche

1. Torsionsschwingungsdämpfer, insbesondere geteiltes Schwungrad, mit einer primären Schwungmasse (2), die drehfest mit der Antriebswelle einer Brennkraftmaschine verbindbar ist, und mit einer sekundären Schwungmasse (4), die gegen den Widerstand mindestens einer Energiespeichereinrichtung (6,56) relativ zu der primären Schwungmasse (2) verdrehbar ist, **dadurch gekennzeichnet, dass** die primäre Schwungmasse (2) über eine starre Kopplungseinrichtung (30), die mit einer Zugdämpfungseinrichtung (32) zusammenwirkt, mit der sekundären Schwungmasse koppelbar ist.

2. Torsionsschwingungsdämpfer nach Anspruch 1, **dadurch gekennzeichnet, dass** die Zugdämpfungseinrichtung (32) eine Mitnehmereinrichtung (33) umfasst, die gegen den Widerstand eines Zugdämpfungselements (36) relativ zu der sekundären Schwungmasse (4) bewegbar ist.

3. Torsionsschwingungsdämpfer nach Anspruch 2, **dadurch gekennzeichnet, dass** die Mitnehmereinrichtung (33) eine Mitnehmemase (43) aufweist, an der in einem gekoppelten Zustand eine Klinke (44) der Kopplungseinrichtung (30) so in Eingriff kommt, dass die primäre Schwungmasse (2) starr mit der Mitnehmereinrichtung (33) verbunden wird.

4. Torsionsschwingungsdämpfer nach Anspruch 3, **dadurch gekennzeichnet, dass** die Klinke (44) im gekoppelten Zustand zwischen der Mitnehmereinrichtung (33) und der primären Schwungmasse (2) eingeklemmt ist.

5. Torsionsschwingungsdämpfer nach Anspruch 3 oder 4, **dadurch gekennzeichnet, dass** die Klinke (44) zwei zueinander parallele Klemmflächen aufweist, die im gekoppelten Zustand jeweils an entsprechenden Gegenflächen anliegen, die an der Mitnehmereinrichtung (33) und der primären Schwungmasse (2) vorgesehen sind.

6. Torsionsschwingungsdämpfer nach Anspruch 5, **dadurch gekennzeichnet, dass** die Klemmflächen und die entsprechenden Gegenflächen in einem Winkel von etwa 45 Grad zu einer Radialen geneigt sind.

7. Torsionsschwingungsdämpfer nach einem der Ansprüche 3 bis 6, **dadurch gekennzeichnet, dass** ein Kopplungselement (48) so an der primären Schwungmasse (2) angebracht ist, dass die Klinke (44) in den gekoppelten Zustand vorgespannt ist.

8. Torsionsschwingungsdämpfer nach Anspruch 7, **dadurch gekennzeichnet, dass** die Klinke (44) unter Fliehkrafteinwirkung aus dem gekoppelten Zustand in einen entkoppelten Zustand bewegbar ist, in dem die sekundäre Schwungmasse (4) gegen den Widerstand der Energiespeichereinrichtung (6,56) relativ zu der primären Schwungmasse (2) verdrehbar ist.

9. Torsionsschwingungsdämpfer nach Anspruch 8, **dadurch gekennzeichnet, dass** ein Reibelement (51) so an dem Kopplungselement (48) angreift, dass die Klinke (44) so lange im gekoppelten Zustand gehalten wird, bis ein vorgegebener Drehzahlbereich erreicht wird.

10. Torsionsschwingungsdämpfer nach einem der Ansprüche 2 bis 9, **dadurch gekennzeichnet, dass** die Mitnehmereinrichtung (33) mindestens ein Fenster (34,35) umfasst, das deckungsgleich zu einem Fenster (37) in der sekundären Schwungmasse (4) ist, wobei in die Fenster (34,35,37) ein Zugenergiespeicherelement (36) eingespannt ist.

11. Torsionsschwingungsdämpfer nach einem der Ansprüche 2 bis 10, **dadurch gekennzeichnet, dass** an der Mitnehmereinrichtung (33) zwei Führungsbolzen (38,39) befestigt sind, die jeweils in einem Langloch (40,41) geführt sind, das in der sekundären Schwungmasse (4) vorgesehen ist.

12. Torsionsschwingungsdämpfer nach einem der vorhergehenden Ansprüche, **dadurch gekennzeichnet, dass** an der sekundären Schwungmasse (4) mindestens ein Flanschelement (62;92) befestigt ist, das ein erstes Schubenergiespeicherelement (76,106) aufweist, das an einer Schubdämpfungseinrichtung (71;101) angreift, die der Energiespeichereinrichtung (6) vorgeschaltet ist.

13. Torsionsschwingungsdämpfer nach Anspruch 12, **dadurch gekennzeichnet, dass** die Schubdämpfungseinrichtung (71;101) ein zweites Schubenergiespeicherelement (76) umfasst, das durch das Flanschelement (62) beaufschlagt wird, sobald der Widerstand des ersten Schubenergiespeicherelements (71) zumindest teilweise überwunden ist.

14. Torsionsschwingungsdämpfer nach einem der vorhergehenden Ansprüche, der zwischen die Antriebswelle der Antriebseinheit und die Getriebeeingangswelle geschaltet ist in einer Drehmomentübertragungseinrichtung im Antriebsstrang eines Kraftfahrzeugs zur Drehmomentübertragung zwischen einer Antriebseinheit, insbesondere einer Brennkraftmaschine, mit einer Antriebswelle, insbesondere einer Kurbelwelle, mit einem Getriebe mit mindestens einer Getriebeeingangswelle, mit mindestens einer Kupplungseinrichtung.

## Claims

1. Torsional vibration damper, in particular split flywheel, having a primary flywheel mass (2) which can be connected fixedly to the drive shaft of an internal combustion engine so as to rotate with it, and having a secondary flywheel mass (4) which can be rotated relative to the primary flywheel mass (2) counter to the resistance of at least one energy storage device (6, 56), **characterized in that** the primary flywheel mass (2) can be coupled to the secondary flywheel mass via a rigid coupling device (30) which interacts with a tension damping device (32).

2. Torsional vibration damper according to Claim 1, **characterized in that** the tension damping device (32) comprises a driver device (33) which can be moved relative to the secondary flywheel mass (4) counter to the resistance of a tension damping element (36).

3. Torsional vibration damper according to Claim 2, **characterized in that** the driver device (33) has a driver lug (43), against which a pawl (44) of the coupling device (30) comes into engagement in a coupled state in such a way that the primary flywheel mass (2) is connected rigidly to the driver device (33).

4. Torsional vibration damper according to Claim 3, **characterized in that** the pawl (44) is clamped in between the driver device (33) and the primary flywheel mass (2) in the coupled state.

5. Torsional vibration damper according to Claim 3 or 4, **characterized in that** the pawl (44) has two clamping faces which are parallel to one another and, in the coupled state, bear in each case against corresponding mating faces which are provided on the driver device (33) and the primary flywheel mass (2).

6. Torsional vibration damper according to Claim 5, **characterized in that** the clamping faces and the corresponding mating faces are inclined at an angle of approximately 45 degrees with respect to a radial line.

7. Torsional vibration damper according to one of Claims 3 to 6, **characterized in that** a coupling element (48) is attached to the primary flywheel mass (2) in such a way that the pawl (44) is prestressed into the coupled state.

8. Torsional vibration damper according to Claim 7, **characterized in that** the pawl (44) can be moved under the action of centrifugal force out of the coupled state into a decoupled state, in which the secondary flywheel mass (4) can be rotated relative to the primary flywheel mass (2) counter to the resistance of the energy storage device (6, 56).

9. Torsional vibration damper according to Claim 8, **characterized in that** a friction element (51) acts on the coupling element (48) in such a way that the pawl (44) is held in the coupled state until a predefined rotational speed range is reached.

10. Torsional vibration damper according to one of Claims 2 to 9, **characterized in that** the driver device (33) comprises at least one window (34, 35) which is congruent with a window (37) in the secondary flywheel mass (4), a tensile energy storage element (36) being clamped into the windows (34, 35, 37).

11. Torsional vibration damper according to one of Claims 2 to 10, **characterized in that** two guide pins (38, 39) are fastened to the driver device (33), which guide pins (38, 39) are guided in each case in a slot (40, 41) which is provided in the secondary flywheel mass (4).

12. Torsional vibration damper according to one of the preceding claims, **characterized in that** at least one flange element (62; 92) is fastened to the secondary flywheel mass (4), which flange element (62; 92) has a first thrust energy storage element (76; 106) which acts on a thrust damping device (71; 101) which is connected upstream of the energy storage device (6).

13. Torsional vibration damper according to Claim 12, **characterized in that** the thrust damping device (71; 101) comprises a second thrust energy storage element (76) which is loaded by the flange element (62) as soon as the resistance of the first thrust energy storage element (71) is overcome at least partially.

14. Torsional vibration damper according to one of the preceding claims which is connected between the drive shaft of the drive unit and the transmission input shaft in a torque transmission device in the drive train of a motor vehicle for the transmission of torque between a drive unit, in particular an internal combustion engine, having a drive shaft, in particular a crankshaft, having a transmission with at least one transmission input shaft, and having at least one clutch device.

## Revendications

1. Amortisseur de vibrations de torsion, en particulier volant moteur en deux parties, avec une masse d'inertie primaire (2), qui peut être raccordée solidaire en rotation à l'arbre d'entraînement d'un moteur à combustion interne et avec une masse d'inertie secondaire (4) qui peut être rotative contre la résistance d'un dispositif accumulateur d'énergie (6, 56) par rapport à la masse d'inertie primaire (2) **caractérisé en ce que** la masse d'inertie primaire (2) peut être couplée à la masse d'inertie secondaire par un dispositif d'accouplement rigide (30) qui coopère avec un dispositif d'amortissement de la traction (32).

2. Amortisseur de vibrations de torsion selon la revendication 1, **caractérisé en ce que** le dispositif d'amortissement de la traction (32) comprend un dispositif d'entraînement (33) qui peut être déplacé contre la résistance d'un élément d'amortissement de la traction (36) par rapport à la masse d'inertie secondaire (4).

3. Amortisseur de vibrations de torsion selon la revendication 2, **caractérisé en ce que** le dispositif d'entraînement (33) comporte une masse d'entraînement (43) sur laquelle à un état couplé un cliquet (44) du dispositif d'accouplement (30) vient en prise de telle manière que la masse d'inertie primaire (2) est raccordée de façon rigide au dispositif d'entraînement (33).

4. Amortisseur de vibrations de torsion selon la revendication 3, **caractérisé en ce que** le cliquet (44) à l'état couplé est serré entre le dispositif d'entraînement (33) et la masse d'inertie primaire (2).

5. Amortisseur de vibrations de torsion selon la revendication 3 ou 4, **caractérisé en ce que** le cliquet (44) comporte deux surfaces de serrage parallèles l'une à l'autre qui adhèrent respectivement, à l'état couplé, aux surfaces opposées correspondantes qui sont prévues sur le dispositif d'entraînement (33) et la masse d'inertie primaire (2).

6. Amortisseur de vibrations de torsion selon la revendication 5, **caractérisé en ce que** les surfaces de serrage et les surfaces opposées correspondantes sont inclinées dans un angle d'environ 45 degrés par rapport à une radiale.

7. Amortisseur de vibrations de torsion selon l'une quelconque des revendications 3 à 6, **caractérisé en ce qu'**un élément d'accouplement (48) est monté sur la masse d'inertie primaire (2) de telle manière que le cliquet (44) est préalablement tendu à l'état couplé.

8. Amortisseur de vibrations de torsion selon la revendication 7, **caractérisé en ce que** le cliquet (44) peut être déplacé sous l'effet de la force d'inertie de l'état couplé à un état découplé par le fait que la masse d'inertie secondaire (4) peut être rotative contre la résistance du dispositif accumulateur d'énergie (6, 56) par rapport à la masse d'inertie primaire (2).

9. Amortisseur de vibrations de torsion selon la revendication 8, **caractérisé en ce qu'**un élément de frottement (51) vient en prise sur l'élément d'accouplement (48) de telle manière que le cliquet (44) est maintenu à l'état couplé jusqu'à ce qu'une gamme de vitesses de rotation préalablement définie soit atteinte.

10. Amortisseur de vibrations de torsion selon l'une quelconque des revendications 2 à 9, **caractérisé en ce que** le dispositif d'entraînement (33) comprend au moins une fenêtre (34, 35) qui est identique en couverture à une fenêtre (37) dans la masse d'inertie secondaire (4), pour lequel un élément accumulateur d'énergie de traction (36) est serrée dans les fenêtres (34, 35, 37).

11. Amortisseur de vibrations de torsion selon l'une quelconque des revendications 2 à 10, **caractérisé en ce que** deux tiges de guidage (38, 39) sont fixées sur le dispositif d'entraînement (33) qui sont guidés respectivement dans un trou oblong (40, 41) qui est prévu dans la masse d'inertie secondaire (4).

12. Amortisseur de vibrations de torsion selon l'une quelconque des revendications précédentes, **caractérisé en ce qu'**au moins un élément de bride (62 ; 92) est fixé sur la masse d'inertie secondaire (4) qui comporte un premier élément accumulateur d'énergie de poussée (76 ; 106) qui vient en prise sur un dispositif d'amortissement de poussée (71 ; 101) qui est monté en amont du dispositif accumulateur d'énergie (6).

13. Amortisseur de vibrations de torsion selon la revendication 12, **caractérisé en ce que** le dispositif d'amortissement de poussée (71 ; 101) comprend un deuxième élément accumulateur d'énergie de poussée (76) qui est sollicité par l'élément de bride (62) dès que la résistance du premier élément accumulateur d'énergie de poussée (71) est au moins en partie surmontée.

14. Amortisseur de vibrations de torsion selon l'une quelconque des revendications précédentes qui est monté entre l'arbre d'entraînement de l'unité d'entraînement et l'arbre d'entrée dans un dispositif de transmission de couple dans la chaîne cinématique de propulsion d'un véhicule automobile pour la transmission de couple entre une unité d'entraînement, en particulier d'un moteur à combustion interne, avec un arbre d'entraînement, en particulier un vilebrequin, avec une transmission avec au moins un arbre d'entrée, avec au moins un dispositif d'accouplement.
